# EUROPEAN PATENT SPECIFICATION

(11) **EP 2 720 548 B1**
(45) Date of publication and mention of the grant of the patent: **16.03.2016**
(21) Application number: 11728142.8
(22) Date of filing: 17.06.2011
(51) Int. Cl.: A21C 11/16, A21C 11/00, A23L 7/117, A23L 7/00, A23P 30/20, A23P 30/30

(54) **GAS ASSISTED CO-EXTRUSION APPARATUS**
GASUNTERSTÜTZTES KOEXTRUSIONSGERÄT
APPAREIL DE CO-EXTRUSION ASSISTÉ PAR UN GAZ

(43) Date of publication of application: 23.04.2014
(73) Proprietor: Kellogg Company, Battle Creek, MI 49016-3599 (US)
(72) Inventor: GIMMLER, Norbert, Portage, MI 49024 (US); ALMEIDA DOMINGUEZ, Helbert, David, Battle Creek, MI 49015 (US); BERNATH, Charles, Fulton, MI 49052 (US); SMITH, Charles, A., Marshall, MI 49068 (US); ENGLE, Terry, East Leroy, MI 49051 (US)
(74) Representative: Monzón de la Flor, Luis Miguel
(86) International application number: PCT/US2011/040824
(87) International publication number: WO 2012/173629

(56) References cited:
- EP-A1- 0 168 276
- WO-A1-2008/095544
- DE-A1- 3 311 794
- DE-A1- 3 417 196
- FR-A1- 2 572 899
- GB-A- 1 253 104
- GB-A- 2 297 936
- US-A- 2 816 837

## Description

### BACKGROUND OF THE INVENTION

### 1. Field of the Invention

The subject invention relates to a gas assisted co-extrusion apparatus for forming food products such as cereal or snack food and a method for using the same.

### 2. Description of the Prior Art

Conventional co-extrusion systems are designed such that a dough material is extruded about a pumpable filling or fluid. Typically, these systems are designed such that the pumpable filling or fluid is supplied to a co-extrusion die via a pipe attached to the die. The pipe is typically attached at a 90° angle to the die face and then takes a 90° turn inside the die in order to align itself with the center of the die orifice through which the food material is being extruded. The food material is extruded over the pipe creating an inner cavity in the food material as the pipe pumps the filling, or fluid into the inner cavity.

One such system is disclosed in U.K. Patent Application No. 2297936A to Frame. The Frame application discloses a die assembly for the extrusion of an expandable product. The die defines a through bore in which the expandable product is fed from a die face. A co-axial gas pipe is supported in the bore and includes a free end which projects outwardly from the die face. The gas pipe disclosed in the Frame application is attached at a 90° angle to the die face and then takes a 90° turn inside the die, specifically in the bore, in order to align itself with the center of the bore through which the expandable product is being extruded. In addition, the gas pipe enters the die adjacent the die face and as such, only travels over a limited portion of the bore. A die outlet is defined at the die face between the through bore and a tubular spacer that is secured to the gas pipe. Frame further discloses the use of a second pipe for depositing a cream into the product. The expandable product is fed over the tubular spacer and out the die outlet. Based on the heat and pressure of the expandable product at the die outlet, as the expandable product exits the die outlet, it expands. Thus, at the die outlet, the expandable product has a wall thickness that is greater than the thickness of the die outlet between the bore and tubular spacer.

Another such system is disclosed in U.S. Patent No. 6,586,031 to Kelly. The Kelly patent discloses a method for making hollow tube shaped food pellets or half products. Upon further healing, the pellets of kelly are puffed to produce expanded, shaped snack products with annular cavities The method of Kelly begins with the step of extruding dough through a extruder having a die insert. Dough from the extruder is passed through the die insert to form a tube-like rope having a wall portion defining a inner cavity extending axially along the tubular rope. Air is introduced into the inner cavity of the rope via an injector amounted within the die insert as the tabular rope exits the die insert. The air is introduced to die inner cavity to support the wall portion of the tubular rope such that the tubular rope extrudate exiting the die insert maintains its shape without being deformed by the subsequent handling of the tubular extrudate, by the stretching rollers. Upon exiting the die insert, the dough immediately expands, or pre puffs, because of the sudden pressure drop (from the pressure inside the co extrusion die to atmospheric pressure) and the flash boiling water in the dough. The dough is allowed a specifies distance to cool after exiting the die insert before it enters a gap formed between an upper roller and a borton roller. Each roller generally approximates a conveyor belt assembly. The rollers are spaced from one another such that the distance between them equals the diameter of the die insert exit and is therefore slightly smaller than the expanded, pre puffed rope entering the gap. Accordingly, the rope is compressed as it enters the gap between the rollers. The rollers are operated at a speed greater than the speed at which the rope is being extruded. Accordingly, upon contacting the rope, the rollers stretch the rope axially along the direction in which the rope is being extruded. The stretching preformed by the rollers counteracts the expansion caused by the pre-puffing and produces a rope having a diameter equal to the diameter of the exit of the die insert. The air supplied to the inner cavity of the rope is controlled such that sufficient pressure is applied to the wall portion of the rope to prevent the collapse of the inner cavity as the rope is compressed and axially stretched by the rollers. Upon exiting the rollers, The rope is fed into a cutter which cuts the tubular rope into discrete hollow tube shaped food pellets or half products for further processing.

Another such system is disclosed in US 2816837 patent where is disclosed a method of and apparatus for packaging and preserving products and, preferably to a procedure and apparatus for aseptically enclosing sterilized portions of a product in sterilized containers for storage, handling and distribution. The method includes the steps of: extruding a tube of plastic material to make the tube sterile; sterilizing the substance; introducing the sterile substance aseptically into the extruded tube; and compressing the extruded tube at intervals from opposite walls of the tube thereby forming the tube into a series of sealed containers that may be separated by severing the tube across the sealed portions thereof.

### SUMMARY OF THE INVENTION

The subject invention provides for a gas assisted co-extrusion apparatus for use with an extruder. The extruder produces a dough and includes an extruder exit for the movement of the dough out the extruder. A co-extrusion die extends between a rear face and a from face and is in communication with the extruder to receive the dough from the extruder. At least one nozzle is defined by a bore in the co-extrusion die. The nozzle extends about a nozzle axis to a nozzle exit at the front face of the co-extrusion die. At least one injector, which is tubular, extends between an injector inlet and an injector outlet and along the nozzle axis. The injector extends from the rear face to the front face of the co-extrusion die and through the bore of the co-extrusion die. The injector enters the co-extrusion die through the rear face of the co-extrusion die. The injector and nozzle form the dough into a rope that is tubular with a wall portion and an inner cavity surrounded by the wall portion as the dough is extruded out of the nozzle exit and about the injector. A compressed gas source provides a compressed gas to the injector to radially stretch the wall portion of the rope as the rope is dispersed from the injector. The radial stretching is a result of the pressure introduced to the wall portion of the rope by the compressed gas distributed into the inner cavity of the rope from the injector outlet of the injector. A pipe extends between the compressed gas source and the injector to transport the compressed gas to the injector. The pipe extend between and an upstream end disposed adjacent the compressed gas source and a downstream end disposed adjacent the injector. A delivery system is in communication with the pipe and delivers an entrainable material, such as a plurality of particulates, to the pipe. The coextrusion die is spaced from the extruder to define a void therebetween. The downstream end of the pipe is connected to the injector inlet of the injector in the void. This allows the pipe to operate within the ambient temperature of the environment. The injector is supplied with the compressed gas entrained with the entrainable material prior to entering the injector inlet of the injector. The injector deposits the entrainable material on an inside surface of the wall portion of the rope as the rope is radially stretched by the compressed gas that is entrained within the entrainable material or plurality of particulates.

In general terms, this invention provides a co-extrusion process for producing formed food pieces modified such that a stream of compressed gas is introduced into the inner cavity of extruded ropes of food material, such as for example cooked dough. The subject invention envisions further embodiments of the co-extrusion process such that a material may be entrained into the stream of compressed gas such that it may be deposited within the inner cavity of extruded ropes of food material such as for example cooked dough.

### ADVANTAGES OF THE INVENTION

An advantage of the subject invention includes acquiring the capability to produce formed food pieces having a lower density than those produced using known co-extrusion machinery.

Another advantage of the subject invention includes acquiring the capability to produce formed food pieces having a unique texture differing from those produced using known co-extrusion machinery.

Another advantage of the subject invention includes utilizing the carrying capacity of the compressed air or gas to carry particulates for the purpose of filling or coating the hollow cavity of an extruded food material rope with the particulates.

Another advantage of the subject invention includes reduced clogging of the pipe feeding the entrained particulate into the co-extrusion die by moving the ninety degree bend in the pipe from its old location within the co-extrusion die to a location external to the co-extrusion die. This allows the radius of the bend to be significantly larger than in conventional co-extrusion dies and the bend takes place in an environment at ambient temperature rather than the elevated temperature inside the co-extrusion die.

Further advantages will be understood by those skilled in the art upon review of the detailed description provided herein.

### BRIEF DESCRIPTION OF THE DRAWINGS

Figure 1 is a schematic diagram showing the operation of an exemplary embodiment of the subject invention to produce a formed food and the delivery of particulates to the formed food;
Figure 2 is a schematic diagram showing the operation of a second exemplary embodiment of the subject invention to produce a formed food and the delivery of particulates to the formed food;

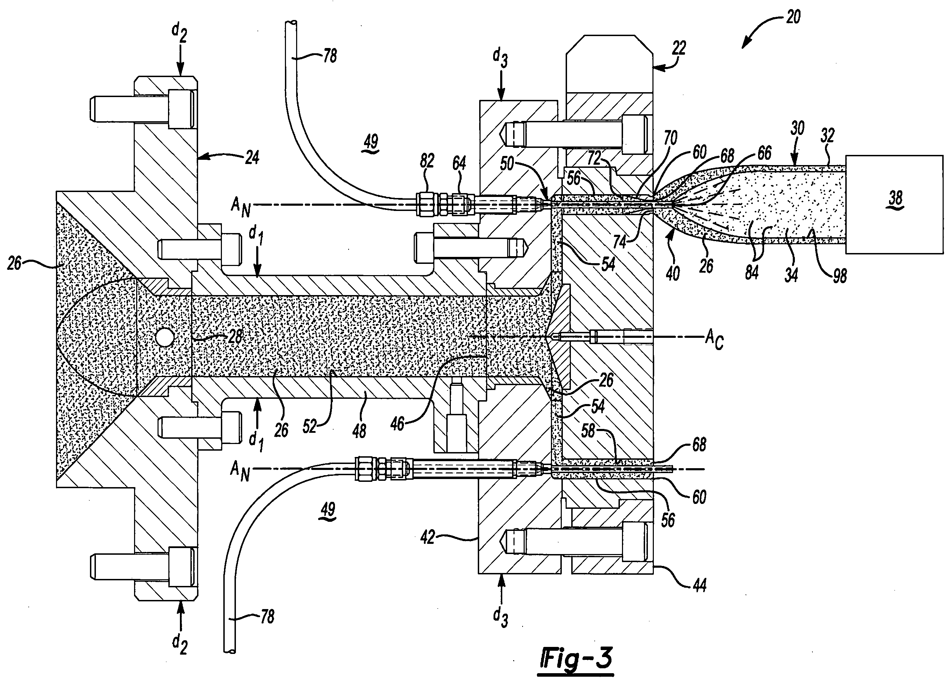

Figure 3 is a partial cross-sectional side view showing a co-extrusion die with the feeding pipe outside the co-extrusion die assembly;

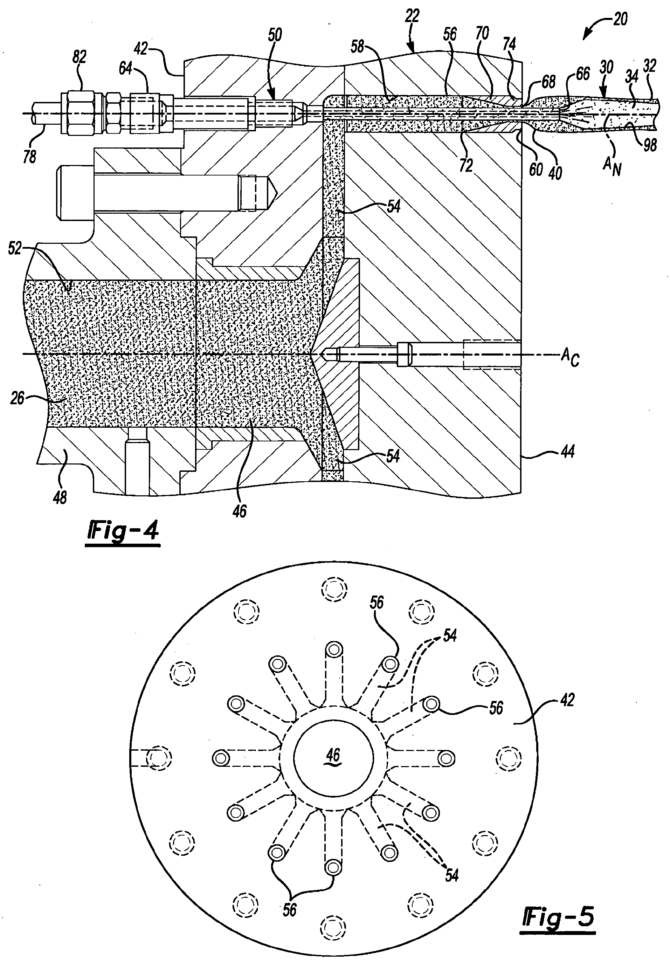

Figure 4 is a partial cross-sectional side view of the present invention showing an air assisted co-extruder; and
Figure 5 is a partial elevation view from the rear face of the co-extrusion die of the present invention showing the in feed of the co-extrusion die.

### DETAILED DESCRIPTION OF THE ENABLING EMBODIMENT

With reference to the Figures, wherein like numerals indicate corresponding parts throughout the several views, a gas assisted co-extrusion apparatus **20** for forming food products is generally shown.

The gas assisted co-extrusion apparatus **20** includes a co-extrusion die **22** for attachment to an extruder **24.** The co-extrusion die **22** is in communication with the extruder **24** to receive a dough **26** from the extruder **24.** The extruder **24** produces the dough **26** and includes an extruder exit **28** for the movement of the dough **26** out the extruder **24.** While it should be appreciated that the extruder **24** could be any type of extruder **24,** the disclosed extruder **24** is a DX Extruder **24** which extrudes under heat and pressure.

Food material, such as cooked dough **26** from the cooking extruder **24** enters the co-extrusion die **22** and is extruded into ropes **30** about a stream of compressed gas or air. Extrusion in this manner produces tube-like ropes **30** of dough **26** having a wall portion **32** defining an inner cavity **34** that extends generally axially along the centerline of the rope **30.** Upon exiting the co-extrusion die **22,** the ropes **30** are cut into discrete food pieces **36** having an inner cavity portion by, for example, a rotary crimper-cutter **38.** The discrete food pieces **36** may be enclosed, pillowed shaped products, open ended products, 3-D shaped food products, or any other shaped food product known in the art. In the exemplary embodiment, the dough **26** is a cooked dough **26,** but the dough **26** may be any extrudable dough **26** or plastic and elastic food material known in the art of extrusion.

The co-extrusion die **22** of the present invention extends between a rear face **42** and a front face **44** and is used to form the dough **26** received from the extruder **24** into the rope **30.** A die inlet **46** is defined by the co-extrusion die **22** and extends along a center axis **A**_{C} from the rear face **42** towards the front face **44** of the co-extrusion die **22.** The die inlet **46** is in communication with the extruder exit **28** of the extruder **24** to receive the dough **26** from the extruder **24.**

The co-extrusion apparatus **20** of the present invention may include an extension **48** that extends between the extruder exit **28** of the extruder **24** and the die inlet **46** of the co-extrusion die **22.** The extension **48** transfers the dough **26** from the extruder **24** to the co-extrusion die **22.** The tubular extension **48** has an extension diameter **d₁** that is less than the extruder diameter **d₂** of the extruder **24** and the co-extrusion diameter **d₃** of the co-extrusion die **22** to define a void **49** between the rear face **42** of the co-extrusion die **22** and the extruder **24.** The void **49** allows for the use of an injector **50** that enters the co-extrusion die **22** from the rear face **42.** In addition, the void **49** provides for clearance and placement of a pipe **78** in the void **49.** The advantage of this will be discussed in greater detail below. While the extension **48** of the exemplary embodiment teaches an inner tube portion **52** that extends linearly along the center axis **A_{C}** for the movement of the dough **26** therethrough, it should be noted that the inner tube portion **52** can have any geometry known in the art. For example, the inner tube portion **52** may be taper between the extruder exit **28** the die inlet **46.** The extension **48** may be modified to provide for different flow characteristics for the dough **26.**

At least one channel **54** is defined by the co-extrusion die **22** and in communication with the die inlet **46.** In the exemplary embodiment, the co-extrusion die **22** defines a plurality of channels **54** that receive the dough **26** from the die inlet **46** and direct the flow of the dough **26** from the die inlet **46.** The channels **54** extend radially from the die inlet **46** and are in communication with a nozzle **56.**

The nozzle **56** directs the flow of the dough **26** out of the co-extrusion die **22.** The nozzle **56** is defined by a bore **58** in the co-extrusion die **22** that extends along a nozzle axis **A_{N}** to a nozzle exit **60** at the front face **44** of the co-extrusion die **22.** In the exemplary embodiment, the nozzle axis **A_{N}** is parallel to the center axis **A_{C}.**

In the exemplary embodiment, the co-extrusion die **22** includes a plurality of nozzles **56,** with each of the nozzles **56** being defined by a bore **58** in the co-extrusion die **22.** Each of the plurality of nozzles **56** are spaced radially about the front face **44** and the center axis **A_{C}** and extend along a corresponding nozzle axis **A_{N}** to a nozzle exit **60.** Each of the nozzles **56** are in communication with a corresponding channel **54** that creates a path of movement through the co-extrusion die **22,** from the die inlet **46,** through the channel **54** and out the nozzle exit **60.** While the shape of the bore **58** in the exemplary embodiment is generally cylindrical, the shape of the bore **58** which defines the nozzle **56** could be oval or any other two dimensional extrudable shape known by one skilled in the art.

The co-extrusion apparatus **20** of the present invention further includes at least one injector **50** that extends through the co-extrusion die **22** along the nozzle axis **A**_{N}. The injector **50** is in communication with a compressed gas source **62** to transfer a compressed gas in the form of a compressed gas stream through the co-extrusion die **22** and into the inner cavity **34** of the rope **30.** In the exemplary embodiment, the co-extrusion apparatus **20** includes a plurality of injectors **50** with each of the injectors **50** extending completely and linearly through the co-extrusion die **22** and along the nozzle axis **A**_{N}. The injector **50** is tube shaped and extends between an injector inlet **64** and an injector outlet **66.** The injection outlet **66** of the injector **50** may protrude outwardly from the front face **44** of the co-extrusion die **22** along the nozzle axis **A_{N}.** This ensures that the compressed gas stream and any material contained within the compressed gas stream hits the inside of the extruded rope **30** after the extruded rope **30** is cooled down enough that it does not tear or burst when it is radially stretched by the pressure of the compressed gas inside the rope **30.** In the exemplary embodiment, the injector inlet **64** protrudes outwardly from the rear face **42** of the co-extrusion die **22** along the nozzle axis **A_{N}** and into the void **49** disposed between the extruder **24** and the co-extrusion die **22.**

An annular ring **68** is defined at the nozzle exit **60** between the bore **58** and the at least one injector **50.** The annular ring **68** defines the initial shape of the dough **26** as the dough **26** exits that nozzle exit **60.** That is, the rope **30,** which includes the wall portion **32** and the inner cavity **34** within the wall portion **32,** is formed as the dough **26** is dispersed through the annular ring **68** and over the injector outlet **66.** The outer shape of the annular ring **68** is determined by the shape of the bore **58.** While the shape of the bore **58** in the exemplary embodiment is generally cylindrical, the shape of the bore **58** which defines the annular ring **68** could be oval or any other two dimensional extrudable shape known by one skilled in the art.

The positioning of the injector **50** through the entire length of the nozzle **56** provides cooling to the dough **26** to reduce the initial stretching of the dough **26** upon exiting the nozzle exit **60.** This cooling, in addition to a positive pressure within the nozzle **56** result in a product having a lower density. The longer length of the injector **50** in the nozzle **56** provides for this cooling with or without the compressed gas moving through the injector **50,** but the cooling may be enhanced by the flow of the compressed gas through the injector **50.**

The present invention may further include an insert **70** that extends between an insert opening **72** and an insert exit **74** and that is disposed in the bore **58** adjacent the nozzle exit **60.** The diameter of the insert **70** decreases from the insert opening **72** to the insert exit **74** to compress the dough **26** prior to exiting the co-extrusion die **22.** When the insert **70** is used, the annular ring **68** is defined between the insert exit **74** and the at least one injector **50** to form the rope **30.**

A compressed gas supply line **76** or pipe **78** is connected to the injector inlet **64** to supply a compressed gas or air in the form of a compressed gas stream from a compressed gas source **62** to the injector **50.** The compressed gas flows from the injector inlet **64** and towards the injector outlet **66** where the compressed gas exits the injector **50** and is fed into the inner cavity **34** of the rope **30** as the rope **30** is formed over the injector outlet **66.** The compressed gas, allows for the inflation of the rope **30** and radial stretching of the wall portion **32** of the rope **30.** In the preferred embodiment of the subject invention, compressed air is supplied to the co-extrusion die **22.** Compressed air is preferable because it is non-toxic and many food processing facilities have a source of compressed air readily available. However, it is envisioned that alternative sources of compressed gas could be used such as compressed nitrogen gas, gaseous carbon dioxide, or a supercritical fluid or liquid that converts into a gas under the given extrusion conditions among others.

A pipe **78** having an upstream end **80** and a downstream end **82** transports the compressed gas stream from the compressed gas source **62** to the injector **50.** The pipe **78** may be made from any known material known in the art, including, but not limited to stainless steel, plastic, or PVC. The pipe **78** is mounted externally from the co-extrusion die **22** with the upstream end **80** is connected to the compressed gas source **62** and the downstream end **82** is connected to the injector inlet **64** of the injector **50.** The downstream end **82** is connected to the injector inlet **64** in the void **49** between the extruder **24** and the rear face **42** of the co-extrusion die **22.** This allows the pipe **78** to operate within the ambient temperature of the environment instead of the higher temperature within the co-extrusion die **22.** This is particularly important when a particulate **84** is entrained into the compressed gas stream. The ambient temperature outside the co-extrusion die **22** allows for the particulates **84** to flow through the pipe **78** without melting which could lead to clogging in the pipe **78.**

The pipe **78** further includes at least one bend or angle to transition. This may be a ninety degree bend or any other angle to transition. In the exemplary embodiment, the pipe **78** is mounted such that the ninety degree bend of the pipe **78** is located outside of the co-extrusion die **22** thus allowing the pipe **78** to operate within the ambient temperature of the environment instead of the higher temperature of the co-extrusion die **22.** Additionally, the external mounting position allows for a pipe **78** having a bend of larger radius and a pipe **78** of larger diameter if desired. In the disclosed embodiment, the ninety degree bend of the pipe **78** has a radius of greater than 1 inch. The location of the bend in the ambient temperature outside the co-extrusion die **22** also assist with the flow of the particulates **84** through the pipe **78** and into the injector **50.**

A delivery system **86** is connected in series with the pipe **78** to feed an entrainable material, such as a plurality of particulates **84,** into the compressed gas stream. In the exemplary embodiment of the subject invention, as the ropes **30** exit the co-extrusion die **22,** the entrainable material or particulates **84** entrained in the compressed gas stream are blown through the inner cavity **34** within the ropes **30** and are deposited on the inside surface **98** of the wall portion **32** of the rope **30.** It is envisioned that the entrainable material is not limited to particulates **84** but could include pastes, powders, fillings, doughs , starches, sugar, spices, creams, or liquids. In this way filler materials or alternatively materials for adding additional color and flavor may be applied to the inside of the food piece. The delivery system **86** could be used to feed a single type of entrainable material or a plurality of entrainable materials to the compressed gas.

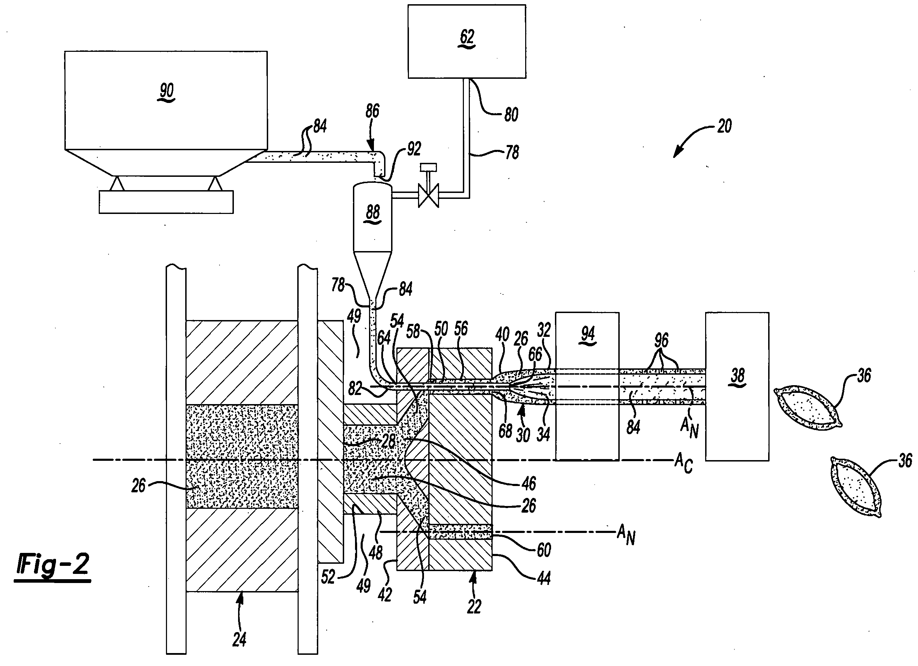

The delivery system **86** may include a venturi pneumatic eductor **88,** as shown in Figure 2, and a feeder **90.** The delivery system **86** delivers the entrainable material or plurality of particulates **84** to the pipe **78** prior to the downstream end **82** of the pipe **78.** As a result, the particulates **84** are introduced to the compressed gas stream prior to entering the injector **50** and are introduced at ambient temperature. As shown in Figure 2, the feeder **90** holds a supply of particulates **84** and dispenses metered amounts of the particulates **84** or entrainable material at an outlet port **92.** The disclosed particulate feeder **90** has an auger to transport the particulates **84** to the outlet port **92.** The feeder **90** is spatially oriented such that the particulates **84** or entrainable material are dispensed into the venturi pneumatic eductor **88.** The venturi pneumatic eductor **88** utilizes pressure provided by the venturi effect to introduce the particulate **84** into the compressed gas stream. Accordingly, the co-extrusion die **22** is supplied with a compressed gas stream containing entrained particulates **84.**

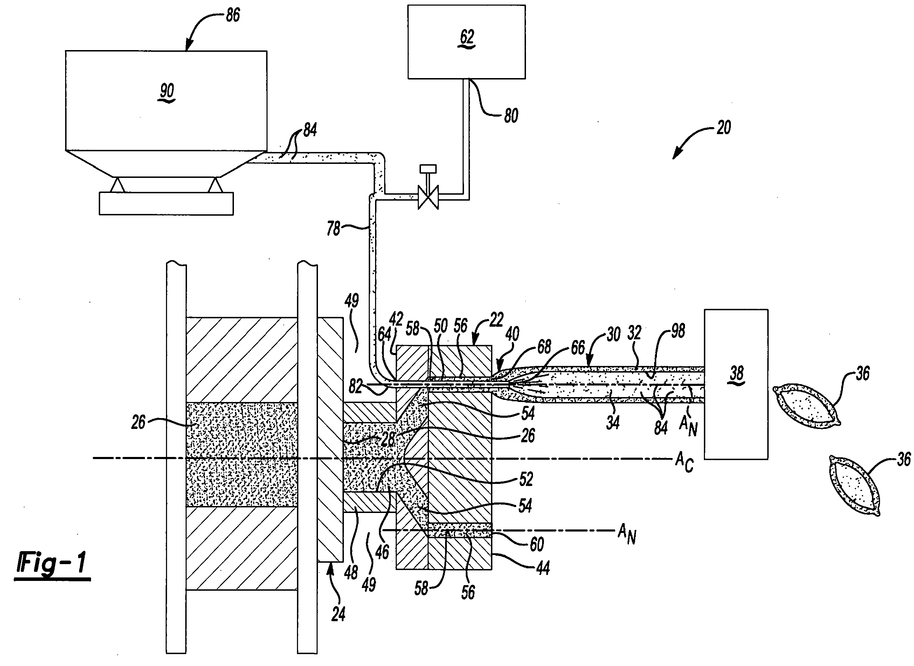

In an alternative embodiment of the subject invention as seen in Figure 1, it is envisioned that the venturi pneumatic eductor **88** may be replaced by a simple T-type connection or any other way known in the art to introduce the entrainable material into an gas stream. It is also understood that the feeder **90** may be replaced by a simple material feed-line where the entrainment of a pumpable material is desired.

As the rope **30** exits the co-extrusion die **22,** the dough **26** is stretched at **40** from the pressure introduced to the wall portion **32** by filling the inner cavity **34** of the rope **30** with compressed gas and entrained particulate **84** from the compressed gas stream exiting the injector outlet **66.** Accordingly, the dough **26** is radially stretched such that the wall portion **32** is reduced in thickness. Significantly, this reduction in wall portion **32** thickness corresponds to a unique food piece texture and low food piece density. The subject invention allows for the production of food pieces having a texture and density distinct from the co-extruders known in the art. Specifically, food pieces having a low density between 10 ounces per gallon and 30 ounces per gallon can be produced, with 14 ounces per gallon being preferred. Additionally, the subject invention allows for the production of food pieces having a crunchy and flaky texture.

The present invention may further include a cutter **38** that is spaced from the front face **44** of the co-extrusion die **22** to cut the rope **30** into the discrete food pieces 36. In the exemplary embodiment, the cutter **38** is a rotary crimper-cutter **38,** but any crimper **38** or cutter **38** known in the art may be used. In the preferred embodiment of the subject invention, the rotary crimper-cutter **38** at least partially seals one end of the rope **30** such that the compressed gas stream is trapped within the inner cavity **34** of the rope **30.** Consequently, the inner cavity **34** is continuously filled with compressed gas and entrained particulates **84** for stretching the wall portion **32** at of the rope **30.** It is understood that the rotary crimper-cutter **38** is not necessary to the operation of the subject invention and that a compressed gas stream of sufficient pressure could be utilized to stretch the wall portion **32** of the rope **30** in the absence of the sealing function provided by the rotary crimper-cutter **38.**

The present invention may further include a perforating apparatus **94** that applies a plurality of perforations **96** to the rope **30.** The perforations **96** extend radially through the wall portion **32** of the rope **30** and allow for the flow of the compressed gas stream through the perforations **96.** The perforations **96** allow for the use of increased amounts of the compressed gas and further for the addition of increased amounts of particulates **84** into the inner cavity **34** of the rope **30** without additional inflation of the rope **30.** The perforating apparatus **94** may include, but is not limited to, a spiked wheel, a laser beam, a water jet or any other perforating apparatus **94** known in the art.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention is only limited by the following claims.

## Claims

1. A gas assisted co-extrusion apparatus (20) for forming food products comprising:
an extruder (24) for producing a dough (26) and having an extruder exit (28) for the movement of the dough (26) out of said extruder (24);
a co-extrusion die (22) extending between a rear face (42) and a front face (44) and being in communication with said extruder (24) for receiving the dough (26) from said extruder (24);
at least one nozzle (56) defined by a bore (58) in said co-extrusion die (22) and extending about a nozzle axis to a nozzle exit (60) at said front face (44) of said co-extrusion die (22);
at least one injector (50);
a compressed gas source (62);
a pipe (78) extending between said compressed gas source (62) and said injector (50) and having an upstream end (80) and a downstream end (82) for transporting said compressed gas to said injector (50);
**characterized in that**
the at least one injector (50) is tube shaped and extends between an injector inlet (64) and an injector outlet (66) and through said bore (58) of said co-extrusion die (22) along said nozzle axis for forming the dough (26) into a rope (30) that is tubular with a wall portion (32) and an inner cavity (34) surrounded by the wall portion (32) as the dough (26) is extruded out of said nozzle exit (60) and about said injector (50);
the compressed gas source (62) has a compressed gas and is in communication with said injector (50) for supplying said compressed gas to said injector (50) for radially stretching the wall portion (32) of the rope (30) from the pressure introduced to the wall portion (32) of the rope (30) by said compressed gas distributed into the inner cavity (34) of the rope (30) from said injector outlet (66) of said injector (50);
and a delivery system (86) in communication with said pipe (78) for delivering an entrainable material (84) to said pipe (78) prior to said downstream end (82) of said pipe (78); said co-extrusion die (22) being spaced from said extruder (24) to define a void (49) therebetween and wherein said downstream end (82) of said pipe (78) is connected to said injector inlet (64) of said injector (50) in said void (49) for allowing said pipe (78) to operate within the ambient temperature of the environment and wherein said injector (50) is supplied with said compressed gas entrained with said entrainable material (84) prior to entering said injector inlet (64) of said injector (50) and said injector (50) deposits said entrainable material (84) on an inside surface of the wall portion (32) of the rope (30) as the rope (30) is radially stretched.

2. The gas assisted co-extrusion apparatus (20) as set forth in claim 1 wherein said injector inlet (66) protrudes outwardly from said rear face (42) of said co-extrusion die (22) along said nozzle axis and into said void (49).

3. The gas assisted co-extrusion apparatus (20) as set forth in claim 1 wherein said pipe (78) further includes at least one bend between said upstream end (80) to said downstream end (82).

4. The gas assisted co-extrusion apparatus (20) as set forth in claim 1 wherein said nozzle exit (60) is defined as an annular ring (68) between said bore (58) and said at least one injector (50).

5. The gas assisted co-extrusion apparatus (20) as set forth in claim 1 further including a perforating apparatus (94) for applying a plurality of perforations (96) to the rope (30) to allow the use of additional amounts of said compressed gas and further for incorporating additional amounts of said entrainable material (84) into the inner cavity (34) of the rope (30) without additional stretching of the rope (30).

6. The gas assisted co-extrusion apparatus (20) as set forth in claim 5 wherein said perforating apparatus (94) is one of a spiked wheel, a laser beam, and water jet.

7. The gas assisted co-extrusion apparatus (20) as set forth in claim 1 further including a die inlet (46) defined by said co-extrusion die (22) and extending along a center axis and being in communication with said extruder exit (28) of said extruder (24) for receiving the dough (26) from said extruder (24).

8. The gas assisted co-extrusion apparatus (20) as set forth in claim 7 further including at least one channel (54) being defined by said co-extrusion die (22) and in communication with said die inlet (46) for receiving the dough (26) from said die inlet (46) and directing the flow of the dough (26) from said die inlet (46).

9. The gas assisted co-extrusion apparatus (20) as set forth in claim 8 wherein said at least one nozzle (56) is in communication with said at least one channel (54) for receiving the dough (26) from said at least one channel (54) and directing the flow of the dough (26) out of said co-extrusion die (22).

10. The gas assisted co-extrusion apparatus (20) as set forth in claim 7 wherein said nozzle axis is parallel to said center axis.

11. The gas assisted co-extrusion apparatus (20) as set forth in claim 7 wherein said co-extrusion die (22) includes a plurality of nozzles (56) and a plurality of channels (54), each of said nozzles (56) being defined by a corresponding bore (58) in said co-extrusion die (22) and extending along a corresponding nozzle axis to said nozzle exit (60) at said front face (44) of said co-extrusion die (22) and wherein said plurality of nozzles (56) are spaced radially about said front face (44) and said center axis, each of said channels (54) being defined by said co-extrusion die (22) and in communication with said die inlet (46) for directing the flow of the dough (26) from said die inlet (46) to a corresponding one of said plurality of nozzles (56).

12. The gas assisted co-extrusion apparatus (20) as set forth in claim 11 further including a plurality of injectors (50), each of said plurality of injectors (50) extending along a corresponding nozzle axis.

13. The gas assisted co-extrusion apparatus (20) as set forth in claim 7 further including an extension (48) being tubular and extending between said extruder exit (28) of said extruder (24) and said die inlet (46) of said co-extrusion die (22) for transferring the dough (26) from said extruder (24) to said co-extrusion die (22), and wherein said extension (48) has an extension diameter being less than an extruder diameter of said extruder (24) and a co-extrusion diameter of the co- extrusion die (22) to define said void (49) between said rear face (42) of said co-extrusion die (22) and said extruder (24).

14. The gas assisted co-extrusion apparatus (20) as set forth in claim 1 further including a cutter (38) spaced from said front face (44) of said co-extrusion die (22) for cutting the rope (30) into discrete food pieces (36).

15. The gas assisted co-extrusion apparatus (20) as set forth in claim 1 further including a cutter (38) for at least partially sealing an end of the rope (30) such that said compressed gas is trapped within the inner cavity (34) of the rope (30) to continuously fill the rope 30 with said compressed gas and said entrainable material (84) for radially stretching the wall portion of the rope (30).

16. The gas assisted co-extrusion apparatus (20) as set forth in claim 1 wherein said injector outlet (66) of said injector (50) protrudes outwardly from said front face (44) of said co-extrusion die (22) along said nozzle axis for cooling the rope (30) and increasing the resiliency of the rope (30) such that the rope (30) will not burst or tear when radially stretched.

17. The gas assisted co-extrusion apparatus (20) as set forth in claim 1 wherein said delivery system (86) includes a feeder (90) for holding said entrainable material (84) and dispensing metered amounts of said entrainable material (84) to said compressed gas within said pipe (78).

18. The gas assisted co-extrusion apparatus (20) as set forth in claim 17 further including a venturi pneumatic eductor (88) being spatially oriented from said feeder (90) and in communication with said pipe (78) for receiving said entrainable material (84) from said feeder (90), wherein said venturi pneumatic eductor (88) utilizes positive pressure provided by the venturi effect for introducing said entrainable material (84) into said compressed gas within said pipe (78).

19. The gas assisted co-extrusion apparatus (78) as set forth in claim 1 wherein said delivery system (86) includes a T-type connection to connect said delivery system (86) to said pipe (78).

## Patentansprüche

1. Ein gasunterstütztes Koextrusionsgerät (20) zur Bildung von Lebensmittelprodukten, umfassend:
- einen Extruder (24) zur Erzeugung eines Teigs (26), der außerdem einen Extruderausgang (28) besitzt, um den Teig (26) aus diesem Extruder (24) hinaus zu befördern;
- eine Koextrusionsmatrize (22), die sich zwischen einer Rückseite (42) und einer Vorderseite (44) erstreckt und in Kommunikation mit diesem Extruder (24) ist, um den Teig (26) von diesem Extruder (24) zu erhalten;
- mindestens eine Düse (56), die von einer Bohrung (58) in dieser Koextrusionsmatrize (22) definiert wird und sich über eine Düsenachse bis zu einem Düsenausgang (60) an der Vorderseite (44) dieser Koextrusionsmatrize (22) erstreckt;
- mindestens einen Injektor (50);
- eine Druckgasquelle (62);
- ein Rohr (78), das sich zwischen dieser Druckgasquelle (62) und diesem Injektor (50) erstreckt und ein vorgelagertes Ende (80) und ein nachgelagertes Ende (82) zur Förderung dieses verdichteten Gases an diesen Injektor (50) besitzt;
**dadurch gekennzeichnet, dass** dieser mindestens eine Injektor (50) röhrenförmig ist und sich zwischen einem Injektoreinlass (64) und einem Injektorauslass (66) sowie durch die Öffnung (58) dieser Koextrusionsmatrize (22) entlang dieser Düsenachse erstreckt, um den Teig (26) zu einem Strang (30) zu formen, der röhrenförmig ist und einen Wandteil (32) und einen von diesem Wandteil (32) umgebenen Innenhohlraum (34) besitzt, während der Teig (26) aus diesem Düsenauslass (60) und um diesen Injektor (50) herum gepresst wird;
wobei die Druckgasquelle (62) ein verdichtetes Gas enthält und in Kommunikation mit diesem Injektor (50) ist, um das verdichtete Gas zu diesem Injektor (50) zu befördern und den Wandteil (32) des Strangs (30) aufgrund des in den Wandteil (32) des Strangs (30) eingeführten Drucks radial zu dehnen, wobei das verdichtete Gas über den Injektorauslass (66) des Injektors (50) im Innenhohlraum (34) des Strangs (30) verteilt wird;
und ein Zufuhrsystem (86) in Kommunikation mit diesem Rohr (78), um ein einbringbares Material (84) vor dem nachgelagerten Ende (82) des Rohrs (78) zu diesem Rohr (78) zu befördern; wobei diese Koextrusionsmatrize (22) mit einem Abstand zu diesem Extruder (24) angeordnet ist, um einen Leerraum (49) zwischen denselben zu definieren, und wobei dieses nachgelagerte Ende (82) des Rohrs (78) mit dem Injektoreinlass (64) des Injektors (50) in diesem Leerraum (49) verbunden ist, um zu erlauben, dass dieses Rohr (78) innerhalb der Raumtemperatur der Umgebung arbeitet, und wobei diese Düse (50) mit dem verdichteten Gas versorgt wird, in welches das einbringbare Material (84) eingebracht wird, bevor das Gas in den Injektoreinlass (64) des Injektors (50) eindringt, und wobei dieser Injektor (50) dieses einbringbare Material (84) an der inneren Oberfläche des Wandteils (32) des Strangs (30) ablagert, während der Strang (30) radial gedehnt wird.

2. Das gasunterstützte Koextrusionsgerät (20) nach Anspruch 1, wobei sich dieser Injektoreinlass (66) von der Rückseite (42) der Koextrusionsmatrize (22) aus entlang der Achsendüse nach außen und in diesen Leerraum (49) erstreckt.

3. Das gasunterstützte Koextrusionsgerät (20) nach Anspruch 1, wobei dieses Rohr (78) außerdem mindestens eine Biegung zwischen dem vorgelagerten Ende (80) und dem nachgelagerten Ende (82) einschließt.

4. Das gasunterstützte Koextrusionsgerät (20) nach Anspruch 1, wobei dieser Düsenausgang (60) als kreisförmiger Ring (68) zwischen der Bohrung (58) und diesem mindestens einen Injektor (50) definiert ist.

5. Das gasunterstützte Koextrusionsgerät (20) nach Anspruch 1, wobei dieses weiterhin eine Perforierungsvorrichtung (94) umfasst, um eine Vielzahl von Perforierungen (96) im Strang (30) durchzuführen und die Verwendung zusätzlicher Mengen dieses verdichteten Gases zu erlauben sowie weiterhin zusätzliche Mengen dieses einbringbaren Materials (84) in den Innenhohlraum (34) des Strangs (30) einzuführen, ohne den Strang (30) zusätzlich zu dehnen.

6. Das gasunterstützte Koextrusionsgerät (20) nach Anspruch 5, wobei diese Perforierungsvorrichtung (94) entweder aus einem Spornrad, einem Laserstrahl oder einem Wasserstrahl besteht.

7. Das gasunterstützte Koextrusionsgerät (20) nach Anspruch 1, wobei dieses weiterhin einen Matrizeneinlass (46) einschließt, der von dieser Koextrusionsmatrize (22) definiert wird und sich entlang einer Mittelachse erstreckt und in Kommunikation mit dem Extruderausgang (28) dieses Extruders (24) ist, um den Teig (26) von diesem Extruder (24) zu empfangen.

8. Das gasunterstützte Koextrusionsgerät (20) nach Anspruch 7, wobei dieses weiterhin mindestens einen Kanal (54) umfasst, der von dieser Koextrusionsmatrize (22) definiert wird und in Kommunikation mit diesem Matrizeneinlass (46) ist, um den Teig (26) von diesem Matrizeneinlass (46) zu empfangen und den Teigfluss (26) von diesem Matrizeneinlass (46) aus zu leiten.

9. Das gasunterstützte Koextrusionsgerät (20) nach Anspruch 8, wobei dieses mindestens eine Düse (56) in Kommunikation mit diesem mindestens einen Kanal (54) einschließt, um den Teig (26) von diesem mindestens einen Kanal (54) zu empfangen und den Teigfluss (26) aus dieser Koextrusionsmatrize (22) nach außen zu leiten.

10. Das gasunterstützte Koextrusionsgerät (20) nach Anspruch 7, wobei die Düsenachse parallel zur Mittelachse verläuft.

11. Das gasunterstützte Koextrusionsgerät (20) nach Anspruch 7, wobei diese Koextrusionsmatrize (22) eine Vielzahl von Düsen (56) und eine Vielzahl von Kanälen (54) einschließt, wobei jede Düse (56) von einer entsprechenden Bohrung (58) in dieser Koextrusionsmatrize (22) definiert wird und sich entlang einer entsprechenden Düsenachse zu diesem Düsenausgang (60) an der Vorderseite (44) der Koextrusionsmatrize (22) erstreckt und wobei diese Vielzahl von Düsen (56) radial mit einem Abstand um diese Vorderseite (44) und diese Mittelachse angeordnet sind, wobei jeder dieser Kanäle (54) von dieser Koextrusionsmatrize (22) definiert wird und in Kommunikation mit diesem Düseneinlass (46) ist, um den Teigfluss (26) von diesem Düseneinlass (46) an eine entsprechende Düse dieser Vielzahl von Düsen (56) zu leiten.

12. Das gasunterstützte Koextrusionsgerät (20) nach Anspruch 11, wobei dieses weiterhin eine Vielzahl von Injektoren (50) einschließt und jeder dieser Injektoren einer Vielzahl von Injektoren (50) sich entlang einer entsprechenden Düsenachse erstreckt.

13. Das gasunterstützte Koextrusionsgerät (20) nach Anspruch 7, wobei dieses weiterhin eine Verlängerung (48) einschließt, die röhrenförmig ist und sich zwischen diesem Extruderausgang (28) des Extruders (24) und dem Einlass (46) der Koextrusionsmatrize (22) erstreckt, um den Teig (26) von diesem Extruder (24) an die Koextrusionsmatrize (22) zu befördern, und wobei diese Verlängerung (48) einen Verlängerungsdurchmesser besitzt, der kleiner als ein Extruderdurchmesser dieses Extruders (24) und ein Koextrusionsdurchmesser der Koextrusionsmatrize (22) ist, um den Leerraum (49) zwischen der Rückseite (46) dieser Koextrusionsmatrize (22) und diesem Extruder (24) zu definieren.

14. Das gasunterstützte Koextrusionsgerät (20) nach Anspruch 1, wobei dieses weiterhin ein Schneidwerkzeug (38) einschließt, das mit einem Abstand von der Vorderseite (44) dieser Koextrusionsmatrize (22) angeordnet ist, um den Strang (30) in einzelne Lebemsmittelstücke (36) zu trennen.

15. Das gasunterstützte Koextrusionsgerät (20) nach Anspruch 1, wobei dieses weiterhin ein Schneidwerkzeug (38) einschließt, um ein Ende des Strangs (30) mindestens teilweise zu versiegeln, sodass dieses verdichtete Gas innerhalb des Innenhohlraums (34) des Strangs (30) eingeschlossen wird, um den Strang (30) kontinuierlich mit diesem verdichteten Gas und diesem einbringbaren Material (84) zu füllen und den Wandteil des Strangs (30) radial zu dehnen.

16. Das gasunterstützte Koextrusionsgerät (20) nach Anspruch 1, wobei der Injektorauslass (66) des Injektors (50) sich von der Vorderseite (44) dieser Koextrusionsmatrize (22) entlang einer Düsenachse nach außen erstreckt, um den Strang (30) zu kühlen und die Elastizität des Strangs (30) zu erhöhen, sodass der Strang (30) bei der radialen Dehnung nicht bricht oder reißt.

17. Das gasunterstützte Koextrusionsgerät (20) nach Anspruch 1, wobei dieses Zufuhrsystem (86) einen Beschicker (90) einschließt, um das einbringbare Material (84) zu speichern und dosierte Mengen des einbringbaren Materials (84) an dieses verdichtete Gas innerhalb des Rohrs (78) auszugeben.

18. Das gasunterstützte Koextrusionsgerät (20) nach Anspruch 17, wobei dieses weiterhin eine pneumatische Venturi-Ejektordüse (88) einschließt, die räumlich von diesem Beschicker (90) orientiert und in Kommunikation mit diesem Rohr (78) ist, um dieses einbringbare Material (84) von diesem Beschicker (90) zu erhalten, wobei diese pneumatische Venturi-Ejektordüse (88) einen aufgrund des Venturi-Effekts bereitgestellten Überdruck verwendet, um dieses einbringbare Material (84) in dieses verdichtete Gas innerhalb des Rohrs (78) einzuführen.

19. Das gasunterstützte Koextrusionsgerät (78) nach Anspruch 1, wobei dieses Zufuhrsystem (86) einen T-förmigen Anschluss einschließt, um dieses Zufuhrsystem (86) mit diesem Rohr (78) zu verbinden.

## Revendications

1. Appareil de co-extrusion assisté par un gaz (20) pour mouler des produits alimentaires comprenant :
- une extrudeuse (24) pour produire une pâte (26) et possédant une sortie d'extrudeuse (28) pour le mouvement de la pâte (26) à l'extérieur de ladite extrudeuse (24) ;
- une filière de co-extrusion (22) s'étendant entre une face arrière (42) et une face avant (44) et étant en communication avec ladite extrudeuse (24) pour recevoir la pâte (26) de ladite extrudeuse (24) ;
- au moins une canule (56) définie par un alésage (58) dans ladite filière de co-extrusion (22) et s'étendant autour d'un axe de canule jusqu'à une sortie de canule (60) sur ladite face avant (44) de ladite filière de co-extrusion (22) ;
- au moins un injecteur (50) ;
- une source de gaz comprimé (62) ;
- un tuyau (78) s'étendant entre ladite source de gaz comprimé (62) et ledit injecteur (50) et possédant une extrémité en amont (80) et une extrémité en aval (82) pour transporter ledit gaz comprimé jusqu'audit injecteur (50) ;
**caractérisé en ce que**
le au moins un injecteur (50) est en forme de tube et s'étend entre une entrée d'injecteur (64) et une sortie d'injecteur (66) et à travers ledit alésage (58) de ladite filière de co-extrusion (22) le long dudit axe de canule pour mouler la pâte (26) dans une corde (30) qui est tubulaire avec une portion de paroi (32) et une cavité interne (34) entourée par la portion de paroi (32) à mesure que la pâte (26) est extrudée en dehors de ladite sortie de canule (60) et autour dudit injecteur (50) ;
la source de gaz comprimé (62) possède un gaz comprimé et est en communication avec ledit injecteur (50) pour fournir ledit gaz comprimé audit injecteur (50) pour étirer radialement la portion de paroi (32) de la corde (30) à partir de la pression introduite sur la portion de paroi (32) de la corde (30) par ledit gaz comprimé distribué dans la cavité interne (34) de la corde (30) à partir de ladite sortie d'injecteur (66) dudit injecteur (50) ;
et un système de délivrance (86) en communication avec ledit tuyau (78) pour délivrer un matériau entraînable (84) audit tuyau (78) préalablement à ladite extrémité en aval (82) dudit tuyau (78) ; ladite filière de co-extrusion (22) étant écartée de ladite extrudeuse (24) pour définir un espace vide (49) entre les deux et où ladite extrémité en aval (82) dudit tuyau (78) est raccordée à ladite entrée d'injecteur (64) dudit injecteur (50) dans ledit espace vide (49) pour permettre audit tuyau (78) de fonctionner dans les limites de température ambiante du milieu environnant et où ledit injecteur (50) est alimenté avec ledit gaz comprimé entraîné avec ledit matériau entraînable (84) avant de pénétrer dans ladite entrée d'injecteur (64) dudit injecteur (50) et ledit injecteur (50) dépose ledit matériau entraînable (84) sur une surface interne de la portion de paroi (32) de la corde (30) lorsque la corde (30) est étirée radialement.

2. L'appareil de co-extrusion assisté par un gaz (20) tel que présenté dans la revendication 1, dans lequel ladite entrée d'injecteur (66) dépasse vers l'extérieur de ladite face arrière (42) de ladite filière de co-extrusion (22) le long dudit axe de canule et dans ledit espace vide (49).

3. L'appareil de co-extrusion assisté par un gaz (20) tel que présenté dans la revendication 1, dans lequel ledit tuyau (78) comprend en outre au moins une courbure entre ladite extrémité en amont (80) et ladite extrémité en aval (82).

4. L'appareil de co-extrusion assisté par un gaz (20) tel que présenté dans la revendication 1, dans lequel ladite sortie de canule (60) est définie comme un anneau (68) entre ledit alésage (58) et ledit au moins un injecteur (50).

5. L'appareil de co-extrusion assisté par un gaz (20) tel que présenté dans la revendication 1, comprenant en outre un appareil de perforation (94) pour réaliser une pluralité de perforations (96) sur la corde (30) afin de permettre l'emploi de quantités supplémentaires dudit gaz comprimé et pour introduire en outre des quantités supplémentaires dudit matériau entraînable (84) dans la cavité interne (34) de la corde (30) sans étirage supplémentaire de la corde (30).

6. L'appareil de co-extrusion assisté par un gaz (20) tel que présenté dans la revendication 5, dans lequel ledit appareil de perforation (94) est l'un des appareils suivants : roue à pointes, faisceau laser et jet d'eau.

7. L'appareil de co-extrusion assisté par un gaz (20) tel que présenté dans la revendication 1, comprenant en outre une entrée de filière (46) définie par ladite filière de co-extrusion (22) et s'étendant le long d'un axe central et étant en communication avec ladite sortie d'extrudeuse (28) de ladite extrudeuse (24) pour recevoir la pâte (26) de ladite extrudeuse (24).

8. L'appareil de co-extrusion assisté par un gaz (20) tel que présenté dans la revendication 7, comprenant en outre au moins un canal (54) étant défini par ladite filière de co-extrusion (22) et en communication avec ladite entrée de filière (46) pour recevoir la pâte (26) de ladite entrée de filière (46) et diriger le flux de la pâte (26) de ladite entrée de filière (46).

9. L'appareil de co-extrusion assisté par un gaz (20) tel que présenté dans la revendication 8, dans lequel ladite au moins une canule (56) est en communication avec ledit au moins un canal (54) pour recevoir la pâte (26) dudit au moins un canal (54) et diriger le flux de la pâte (26) à l'extérieur de ladite filière de co-extrusion (22).

10. L'appareil de co-extrusion assisté par un gaz (20) tel que présenté dans la revendication 7, dans lequel ledit axe de canule est parallèle audit axe central.

11. L'appareil de co-extrusion assisté par un gaz (20) tel que présenté dans la revendication 7, dans lequel ladite filière de co-extrusion (22) comprend une pluralité de canules (56) et une pluralité de canaux (54), chacune desdites canules (56) étant définie par un alésage associé (58) dans ladite filière de co-extrusion (22) et s'étendant le long d'un axe de canule associé jusqu'à ladite sortie de canule (60) sur ladite face avant (44) de ladite filière de co-extrusion (22) et dans lequel ladite pluralité de canules (56) sont espacées radialement autour de ladite face avant (44) et dudit axe central, chacun desdits canaux (54) étant défini par ladite filière de co-extrusion (22) et en communication avec ladite entrée de filière (46) pour diriger le flux de la pâte (26) de ladite entrée de filière (46) jusqu'à l'une de ladite pluralité de canules associée (56).

12. L'appareil de co-extrusion assisté par un gaz (20) tel que présenté dans la revendication 11, comprenant en outre une pluralité d'injecteurs (50), chacun de ladite pluralité d'injecteurs (50) s'étendant le long d'un axe de canule associé.

13. L'appareil de co-extrusion assisté par un gaz (20) tel que présenté dans la revendication 7, comprenant en outre une extension (48) étant tubulaire et s'étendant entre ladite sortie d'extrudeuse (28) de ladite extrudeuse (24) et ladite entrée de filière (46) de ladite filière de co-extrusion (22) pour transférer la pâte (26) de ladite extrudeuse (24) jusqu'à ladite filière de co-extrusion (22), et dans lequel ladite extension (48) possède un diamètre d'extension étant inférieur à un diamètre d'extrudeuse de ladite extrudeuse (24) et un diamètre de co-extrusion de la filière de co-extrusion (22) pour définir ledit espace vide (49) entre ladite face arrière (42) de ladite filière de co-extrusion (22) et ladite extrudeuse (24).

14. L'appareil de co-extrusion assisté par un gaz (20) tel que présenté dans la revendication 1, comprenant en outre un dispositif de découpage (38) écarté de ladite face avant (44) de ladite filière de co-extrusion (22) pour découper la corde (30) en morceaux d'aliment distincts (36).

15. L'appareil de co-extrusion assisté par un gaz (20) tel que présenté dans la revendication 1, comprenant en outre un dispositif de découpage (38) pour sceller au moins partiellement une extrémité de la corde (30) de façon que ledit gaz comprimé soit piégé à l'intérieur de la cavité interne (34) de la corde (30) pour remplir de façon continue la corde (30) avec ledit gaz comprimé et ledit matériau entraînable (84) pour étirer radialement la portion de paroi de la corde (30).

16. L'appareil de co-extrusion assisté par un gaz (20) tel que présenté dans la revendication 1, dans lequel ladite sortie d'injecteur (66) dudit injecteur (50) dépasse vers l'extérieur de ladite face avant (44) de ladite filière de co-extrusion (22) le long dudit axe de canule pour refroidir la corde (30) et accroître la résilience de la corde (30) afin que la corde (30) n'éclate pas ou ne se déchire pas lorsqu'elle est étirée radialement.

17. L'appareil de co-extrusion assisté par un gaz (20) tel que présenté dans la revendication 1, dans lequel ledit système de délivrance (86) comprend un dispositif d'alimentation (90) pour contenir ledit matériau entraînable (84) et dispenser des quantités mesurées dudit matériau entraînable (84) audit gaz comprimé à l'intérieur dudit tuyau (78).

18. L'appareil de co-extrusion assisté par un gaz (20) tel que présenté dans la revendication 17, comprenant en outre un éjecteur pneumatique venturi (88) étant orienté dans l'espace depuis ledit dispositif d'alimentation (90) et en communication avec ledit tuyau (78) pour recevoir ledit matériau entraînable (84) depuis ledit dispositif d'alimentation (90), dans lequel ledit éjecteur pneumatique venturi (88) utilise une pression positive fournie par l'effet venturi pour introduite ledit matériau entraînable (84) dans ledit gaz comprimé à l'intérieur dudit tuyau (78).

19. L'appareil de co-extrusion assisté par un gaz (78) tel que présenté dans la revendication 1, dans lequel ledit système de délivrance (86) comprend un raccord en T pour raccorder ledit système de délivrance (86) audit tuyau (78).
